# EUROPEAN PATENT SPECIFICATION

(11) **EP 0 959 127 B1**
(45) Date of publication and mention of the grant of the patent: **02.07.2003**
(21) Application number: 99106858.6
(22) Date of filing: 07.04.1999
(51) Int. Cl.: C12G 1/02

(54) **Wine-making apparatus**
Vorrichtung für Weinherstellung
Appareil pour vinification

(30) Priority: 20.04.1998 IT PC980010
(43) Date of publication of application: 24.11.1999
(73) Proprietor: CMB S.n.c. di Cassi Angelo & C., 29010 Pianello V.T. PC (IT)
(72) Inventor: Valter, Corrada, 29010 Pianello PC (IT)
(74) Representative: La Ciura, Salvatore

(56) References cited:
- DE-A- 2 737 809
- FR-A- 818 680
- FR-A- 823 187
- FR-A- 1 472 600
- FR-A- 2 405 300
- US-A- 3 507 208

## Description

This invention relates to a wine-making apparatus which exploits the pressure of the carbon dioxide developed during fermentation to stir the must and cause it to moisten the marc.

In particular, the apparatus in accordance with the invention comprises:
- a container with the interior horizontally divided into two chambers
- a first pipe that connects the bottom of the lower chamber to the top of the upper chamber
- a second pipe, equipped with valve-type opening and closing systems, which connects the top parts of the two chambers
- a pressure relief valve in the upper chamber, and
- systems designed to make the two chambers communicate in such a way that fluid can flow from the upper to the lower chamber but not vice versa.

As already stated, this configuration exploits the pressure generated by the fermentation of the must to transfer part of the must from the lower chamber to the upper chamber and moisten the marc that collects on the surface of the must.

One of the stages of the wine-making process involves fermentation of the must in special containers, into which the must is introduced with the marc.

The marc tends to rise to the surface, forming a layer called the "cap" which needs to be periodically moistened with must to ensure that the dyes in the grape skins dissolve and to prevent the risk of acetification of the marc on contact with the air.

Various types of apparatus used for this purpose are known, all of which are open at the top and most of which are fitted with mechanical devices designed to stir the marc and keep it moist.

US 3.507.208 discloses a wine fermenting apparatus compsising a lower chamber and an upper chamber separated by valve means, the upper chamber being open. A conduit extends from below the wine level in the lower chamber into the upper chamber, ane the pressure increase when the wine fermentes, forces the wine into the upper chamber.
When wine reaches a pre-set level, an exhaust valve is opened to allow the pressure in the lower chamber escape, so that the weight of the wine in the upper chamber opens the valve means and the wine returns into the lower chamber.

FR 823.187 shows a wine making apparatus in which te pressure of the gas developed during fermentation is used to push wine into an upper chamber. When the wine in the upper chamber reaches a pre-set level, the pressure is released and the wine can fall down into a lower chamber.

FR 1.472.600 discoses a fermenter in which the gas pressure pushes the wine from a lower chamber into an upper chamber.
When the level of the wine in the upper chamber reaches a pre-set level, an actuator discharges the pressure and opens a passage towards the lower chamber, allowing the wine to come back to the lower chamber.

DE 27 37 809 shows a fermentation vessel in which the must is forced up from a lower chamber, under the pressure of the fermentation gases, through a fermentation gas discharge pipe, into an upper chamber having an open hole 67 in the upper wall.
If the level in the lower chamber decreases to the height of an orifice, fermentation gases escape through a fermentation gas discharge pipe into the upper chamber. Because of the pressure drop in the lower chamber, a valve opens and must flows from the upper chamber, into the lower chamber and during this dissolves pigments out of the pomace cap.

The French pat. 2.732.977, shows a wine making apparatus comprising:
- a lower fermentation container 1;
- an upper container 2 connected to the lower one by means of a pipe 4 provided with a valve 11, said upper container being provided with an upper floating valve 13;
- a duct 3 connecting the lower part of the fermentation container with pipe 4 and therefore with the lower part of the upper container;
- a pipe 6 with a valve 12, connecting the upper part of the fermentation container 1 with valve 13 of the upper container;
- a pipe 7 provided with a valve 15, connecting the pipe 6 with the outside.

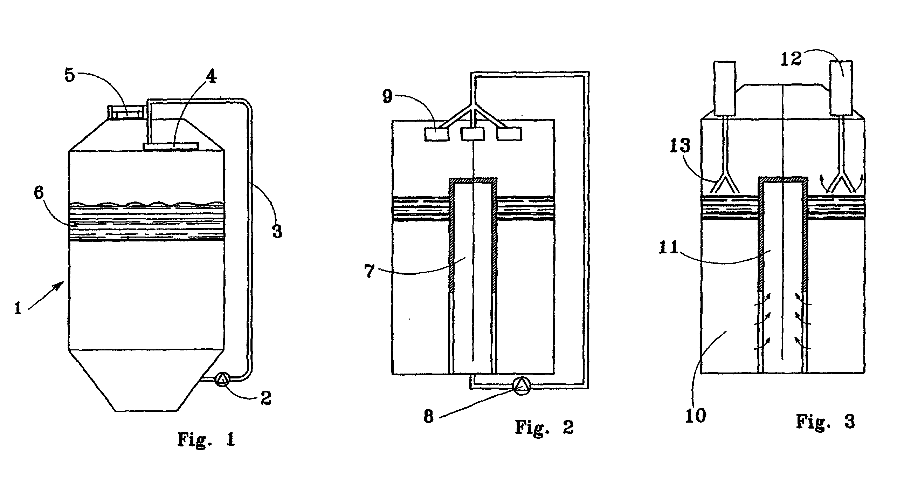

The most common fermenters of known type are schematically illustrated in the annexed figures 1 to 6.

For example, one type of known fermenter (see figure 1) is constituted by a container 1 open at the top, fitted with a pump 2 which pumps must from the bottom of the container and conveys it through a pipe 3 to the top part of the container, from which it flows along a rotary arm 4 (driven by a motor 5) which causes the must to spill onto the layer of marc shown as 6.

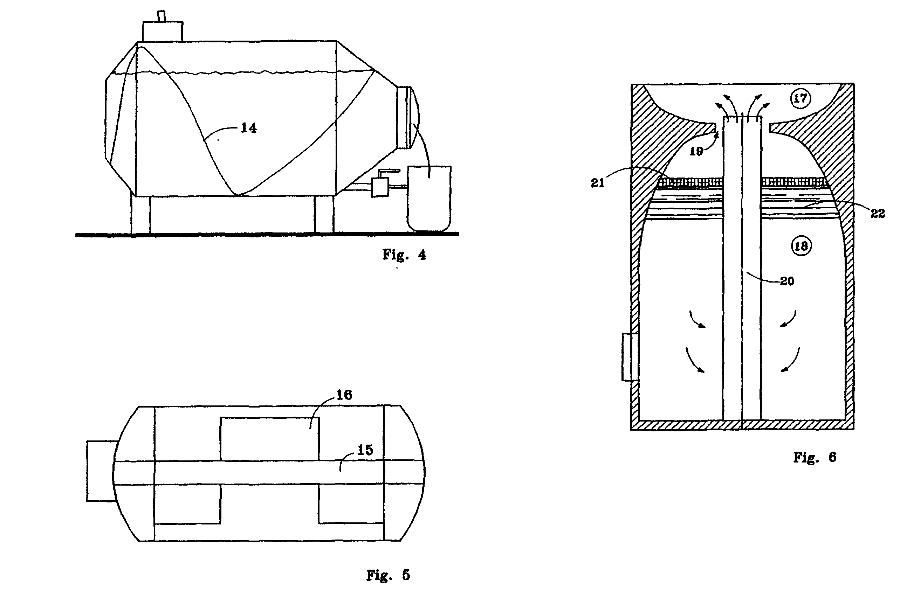

Another fermenter of known type, illustrated in figure 2, comprises a container with a perforated central pipe 7; a pump 8 sucks the must from the said pipe 7 and conveys it to a set of upper outlets 9, through which it is sprayed onto the layer of marc.

Another apparatus of known type (figure 3) comprises a tank 10 with a central tube 11 and a number of pistons 12 at the top; the said pistons move the same number of blades 13, consisting of a pair of paddles hinged to the piston rod which open when they are lowered to press on the marc and push it downwards.

The effect of the pressure exerted is that part of the must rises up central pipe 11, exits at the top and spills onto the marc, thus moistening it.

Other types of known apparatus, illustrated in figures 4 and 5, consist of basically cylindrical, rotating, horizontal-axis containers.

In some cases (figure 4) the container is fitted with a propeller 14 on the perimeter which, when rotated, stirs the marc and pushes it to one end of the container, from which it is discharged. In the other case (figure 5), the container has a shaft 15 fitted with a number of blades 16 which stir the contents, keeping the marc immersed in the must.

Finally, a domed vat (see figure 6) is known; this apparatus consists of a container divided horizontally into two parts 17 and 18 which communicate with one another through a hole 19 in the separating structure.

The domed vat is completed by a pipe 20 with a hole in the lower part and a grid 21 which is fixed to the pipe inside the container after the pressed grapes have been introduced into the container.

The cap of marc 22 which collects against grid 21 prevents the exit of the carbon dioxide developed during fermentation, and the resulting pressure increase causes the must to rise up pipe 20 into upper tank 17, from which it returns to lower tank 18 through gap 19 to moisten the marc.

All these systems involve some disadvantages or limitations, however.

First of all, open vats require special care to ensure that no foreign bodies can enter the vat.

In addition, most known systems require the use of mechanical systems to stir the must.

The present invention is comprised in this sector; it offers a wine-making apparatus of a totally closed type in which the must is moved by exploiting the pressure that develops in the vat as a result of fermentation.

This and other characteristics will emerge more clearly from the following detailed description, provided by way of example but not of limitation, by reference to the annexed drawings in which:
- figures 1 to 6 schematically show some fermenters of known types;
- figure 7 schematically illustrates a wine-making apparatus in accordance with the invention, shown in cross-section.

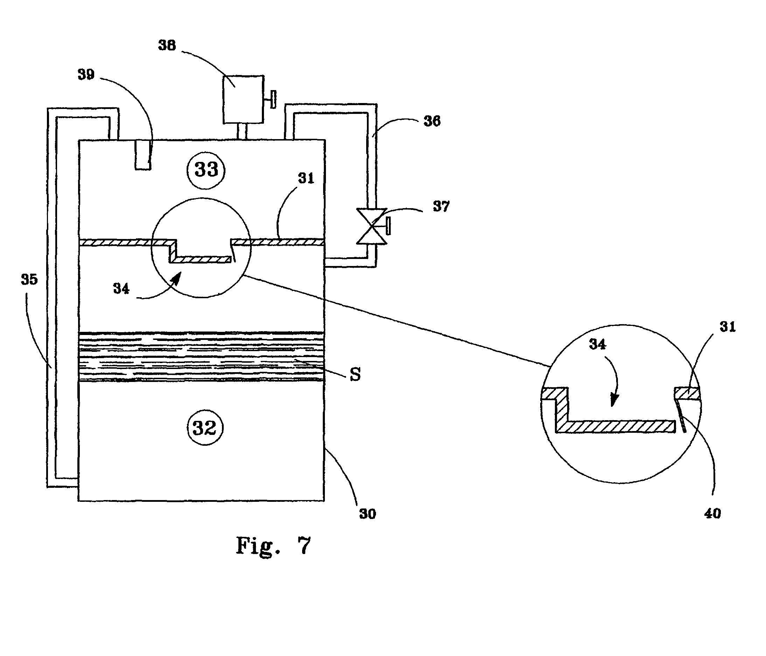

By reference to figure 7, the wine-making apparatus in accordance with the invention basically consists of a container 30, preferably but not necessarily a basically cylindrical container with a vertical axis, which is divided horizontally by a wall 31 into two chambers shown as 32 and 33.

Wall 31 contains an opening which allows the two chambers to communicate, the said opening being closed by a valve device 34 which will be described in more detail below.

A pipe 35, which is always open, leads from the bottom of lower tank 32 to the top of upper tank 30.

The two tanks therefore always communicate with one another through pipe 35.

Another pipe 36, fitted with a valve 37 of known type, connects the top pans of tanks 32 and 33.

A valve 38, which enables the pressure in the chamber to be released, is fitted to the top of tank 33.

A level sensor of known type is fitted inside chamber 33, at a certain distance from bottom wall 31, to detect the level of the liquid in the chamber; when the said liquid reaches the height of the sensor, a signal is generated which controls valves 37 and 38.

Valve element 34 on wall 31, which can be more dearly seen in the detail in figure 7, may simply be constituted by a pressure-containing member 40 which opens inwards into chamber 32, and therefore remains normally dosed when a certain pressure is present in chamber 32.

The apparatus described above operates as follows.

The must and marc are introduced into chamber 32; after a while the marc rises to the surface, where it forms a floating layer indicated in the figure by the letter S.

During fermentation valve 38 remains closed, valve 37 is open, and chambers 32 and 33 communicate with one another through pipes 35 and 36.

As a result of fermentation and the development of carbon dioxide the pressure in the chambers increases, but remains balanced, presenting the same values in the upper and lower chambers.

When the marc needs to be moistened, valve 37 is closed and valve 38 is opened.

The pressure in upper chamber 33 is released to the exterior, and the higher pressure in chamber 32 closes pressure-containing member 40 and exerts a thrust on the liquid which causes the must to rise up pipe 35 and flow into upper chamber 33.

Here, the must accumulates on the bottom, and when it reaches the level of sensor 39, the said sensor generates a signal that closes valve 38 and opens valve 37.

The top of chamber 32 then communicates with upper chamber 33 through pipe 36 until equal pressure is restored in the two chambers.

Under these circumstances, pressure-containing member 40 is subjected on the one hand to the pressure in the chambers, and on the other to the same pressure with the addition of the hydrostatic pressure of the liquid in the upper chamber.

This causes pressure-containing member 40 to open, whereupon the liquid flows into the lower chamber and spills onto the marc, which is thus moistened.

The opening of valve 38 and the closing of valve 37 can be automatically controlled by a timer, or by known devices which, for example, detect when a preset pressure value is reached in the apparatus.

## Claims

1. Wine-making apparatus, **characterised by** the fact that it comprises:
• a container (30) with the interior horizontally divided into two chambers (32, 33); said container being closed;
• a first pipe (35) which connects the upper part of the upper chamber (33) to the bottom of the lower chamber (32), said duct (35) being always open;
• a second pipe (36), fitted with valve-type opening and dosing systems (37), which connects the top parts of the said two chambers (32, 33);
• valve systems (38) designed to release the pressure present in the upper chamber (33);
• valve systems (34) designed to open a passage in the separating wall (31) between the said two chambers (32, 33) to allow the must in the upper chamber to flow down into the chamber below, but not vice versa.

2. Apparatus as claimed in claim 1, in which the said systems (34) are constituted by a pressure-containing (40) member that opens inwards into the lower chamber, the said member being activated by the hydrostatic thrust of the liquid in the upper chamber when the pressure in the two chambers is equal.

3. Apparatus as claimed in claim 1 or 2, **characterised by** the fact that the upper chamber is fitted with a sensor (39) designed to detect the must level in the upper chamber and generate a signal that controls the valve systems (37) present in the connecting pipe (36) between the two chambers (32, 33), valve-type pressure relief systems (38) also being present in the upper chamber.

## Patentansprüche

1. Weinerzeugungsvorrichtung, **gekennzeichnet durch** die Tatsache, dass sie enthält:
• einen im Innern horizontal in zwei Kammern (32, 33) geteilten Behälter, wobei der Behälter geschlossen ist;
• eine erste Rohrleitung (35), die den oberen Teil der oberen Kammer (33) mit dem unteren Teil der unteren Kammer (32) verbindet, wobei die Leitung (35) immer offen ist;
• eine zweite, mit ventilartigen Öffnungs- und Schließsystemen (37) ausgestattete Rohrleitung (36), die die oberen Teile der beiden Kammern (32, 33) verbindet;
• zum Ablassen des in der oberen Kammer (33) vorhandenen Druckes vorgesehene Ventilsysteme (38);
• zum Öffnen einer Passage in der Trennwand (31) zwischen den beiden Kammern (32, 33) vorgesehene Ventilsysteme (34), um dem Most in der oberen Kammer zu ermöglichen, in die Kammer darunter hinab zu fließen, aber nicht umgekehrt.

2. Vorrichtung nach Anspruch 1, bei der die Systeme (34) durch ein Druck zurückhaltendes Glied gebildet werden, das in die untere Kammer hinein öffnet, wobei das Glied durch den hydrostatischen Druck der Flüssigkeit in der oberen Kammer aktiviert wird, wenn der Druck in den beiden Kammern gleich ist.

3. Vorrichtung nach Anspruch 1 oder 2, **gekennzeichnet durch** die Tatsache, dass die obere Kammer mit einem Sensor (39) ausgestattet ist, der zum Erkennen des Most-Pegels in der oberen Kammer und zum Erzeugen eines Signals ausgestaltet ist, das das in der Verbindungsleitung (36) zwischen den beiden Kammern (32, 33) vorhandene Ventilsystem (37), ferner in der oberen Kammer vorhandene ventilartige Druckentlastungssysteme (38) steuert.

## Revendications

1. Appareil pour faire du vin, **caractérisé par le fait qu'**il comprend :
. un conteneur (30) dont l'intérieur est divisé horizontalement en deux chambres (32, 33), ledit conteneur étant fermé ;
. un premier conduit (35) qui relie la partie supérieure de la chambre supérieure (33) au bas de la partie inférieure (32), ledit conduit (35) étant toujours ouvert ;
. un deuxième conduit (36), muni d'une ouverture de type vanne et de systèmes de fermeture (37), qui relie les parties supérieures desdites deux chambres (32, 33) ;
. des systèmes de vannes (38) conçus pour libérer la pression présente dans la chambre supérieure (33) ;
. des systèmes de vannes (34) conçus pour ouvrir un passage dans le mur de séparation (31) entre lesdites deux chambres (32, 33) pour permettre que le moût de la chambre supérieure s'écoule vers le bas dans la chambre inférieure, mais non vice versa.

2. Appareil selon la revendication 1, dans lequel lesdits systèmes (34) sont constitués par un organe pour contenir la pression (40) qui s'ouvre vers l'intérieur dans la chambre inférieure, ledit organe étant actionné par la poussée hydrostatique du liquide dans la chambre supérieure lorsque la pression dans les deux chambres est égale.

3. Appareil selon la revendication 1 ou 2, **caractérisé par le fait que** la chambre supérieure est munie d'un détecteur (39) conçu pour détecter le niveau de moût dans la chambre supérieure et générer un signal qui commande le système de vanne (37) présent dans le conduit de connexion (36) entre les deux chambres (32, 33), des systèmes de décharges de pression de type vanne (38) étant également présents dans la chambre supérieure.
